# EUROPEAN PATENT APPLICATION

(11) **EP 3 181 024 A1**
(43) Date of publication of application: **21.06.2017**
(21) Application number: 15200935.3
(22) Date of filing: 17.12.2015
(51) Int. Cl.: A47K 1/04, B32B 7/12, E03C 1/18

(54) **A SINK AND A METHOD FOR MANUFACTURING SAME**

(71) Applicant: Kebla B.V., 9356 BX Tolbert (NL)
(72) Inventor: VAN WIJK, Jacobus, 9356 BX Tolbert (NL)
(74) Representative: Plaggenborg, Menko Bernard

(57) **Abstract**

Sink (1) for a work top, comprising a ridge (8) for coupling said sink (1) to said work top and a basin connected to said ridge (8), said basin being comprised of walls (3, 4, 5) and a bottom (2). At least one of said walls (3, 4, 5) comprises a double wall panel, this double wall panel comprising an inner wall panel (6) and an outer wall panel (7), wherein said bottom (2) is connected to said inner wall panel (6), a space between said panels (6, 7) being substantially completely filled with an adhesive (13).

## Description

The present invention relates to a sink according to the preamble of claim 1. The invention further relates to a method for manufacturing such a sink, as mentioned in claim 12.

It is known in the art to make sinks from a plurality of wall panels. These sinks are made of panels that re connected to each other at their outer rims by gluing same. These connections deteriorate through time, leading to leakage and break.

Such known sinks therefore have disadvantages that cannot be removed.

Tendency of most manufacturers is to manufacture sinks from one piece, i.e. a bottom and integrated walls. As a consequence, the disadvantage of leakage is easily avoided. However, it is impossible to manufacture the sink from a natural material, like ceramics, granite, or the like materials.

The invention aims at providing an improved sink of the kind mentioned in the preamble.

The invention further aims at providing a sink that is made of ceramics, granite, or a composite material.

So as to obtain at least one of the above mentioned aims, the invention provides a sink comprising the features mentioned in claim 1. This sink has the advantage that it provides an excellent water tightness and long lasting performance. Also, it has a taut and modern appearance, depending on the materials used. As a matter of fact, it can be easily manufactured so as to have any required appearance. For example, it can be made of a fully natural material, a composite material or a plastics material.

It has also shown that the sink according to the invention is light weight. Even though it may comprise ceramics wall panels, it still has a light weight. Nevertheless, its strength is very high, due to the adhesive filling the gap between said inner and outer panels. Such synergistic effect is a surprising but advantageous effect.

The invention therefore relates to a sink for a work top, comprising a ridge for coupling said sink to said work top and a basin connected to said ridge, said basin being comprised of walls and a bottom, characterized in that at least one of said walls comprises a double wall panel, an inner wall panel and an outer wall panel, wherein said bottom is connected to said inner wall panel, a space between said panels being substantially completely filled with an adhesive. This sink provides the advantages as mentioned above.

In a sink that can be used without any reserve, the bottom comprises a metal sheet material. This allows one to place any item in the sink without the risk of damaging or breaking the bottom.

So as to obtain a firm connection between the bottom and the side walls, said bottom comprises a flanged edge, said flanged edge being at least partly positioned in between said two panels. As a consequence, the bottom is enclosed by adhesive.

So as to obtain a high strength connection to a work top, for example and preferably a kitchen counter, said ridge is part of an upper edge of said sink, said edge being manufactured from a metal, preferably a stainless steel material. Said edge may be positioned on said kitchen counter. Such ensures that the sink will be carried by said counter. As known in the art, the kitchen counter may be provided with a recess, receiving the said edge. The edge may be coupled to the worktop by means of a glue or the like.

An optimum strength is obtained if said ridge is comprised of a continuous piece of material.

A neat and taut appearance is obtained if at least two adjacent panels are coupled through mitred joints. Such provides the additional advantage that adhesive is effectively retained within the space between the inner and outer panels since higher clamping force may be applied when using mitred joints. In this embodiment, it is most preferably that all joints are mitred joints.

If low cost is required, at least two adjacent panels are coupled through butt joints. In that case, it is most preferably that all joints are butt joints.

A high strength sink is obtained if said bottom is tightly positioned against said inner panel and wherein said adhesive extends across at least part of said bottom. After hardening said adhesive, a substantially single product is obtained, wherein all parts are connected through said adhesive. The adhesive may be any adhesive that provides a connection with a metal and a ceramics or any other stone or composite material. More in particular, the adhesive may provide some dampening characteristics, lowering the sound level when placing items in the sink. The adhesive should be able to withstand heat shocks, for example when pouring boiling water in the sink.

As indicated in a general manner above, it is especially favorable if said outer panels and said inner panels are positioned against said edge, and wherein said outer panels extend to a position distanced further away from said edge than said inner panels. Such allows one to add adhesive into the space between said inner and outer panels, as a matter of fact when the sink is positioned upside down, i.e. the edge being placed at a down most position and the wall panels directing upwards. After filling the said space, adhesive will be retained by the outer wall panels and will cover the bottom at least partly. Part of the bottom where the drain is provided may be covered so as to keep that part free from adhesive. Such ensures that the bottom forms integral part of the wall panels.

A proper covering is obtained when said outer panels extend at least 0.5 cm further way from said edge, preferably at least 1 cm.

As indicated above, it is preferred for the wall panels to be comprised of a ceramic material. Such material provides high strength at relatively low wall thickness. Also, a ceramics may be easily connected to an adhesive.

According to a further embodiment, the invention relates to a method for manufacturing a sink according to the invention, comprising the steps step of: - [1] positioning an edge profile in a mold; - [2] positioning a set of inner wall panels on said edge and connecting said inner wall panels and said edge profile through an adhesive; - [3] positioning a set of outer wall panels on said edge profile at a distance from said inner wall panels and connecting said outer wall panels and said edge profile; - [4] placing a bottom on said inner wall panels, optionally connecting same;- [5] pouring an adhesive in the space provided between said inner and outer wall panels; and - [6] hardening said adhesive. At least some of the goals as indicated above are achieved with this method.

Analogous to a preferred embodiment of the sink, it is preferred in the method to comprise the step of: - [7] pouring adhesive on at least part of said bottom, preferably concurrently with step [5].

The method preferably further comprises the step of covering joints between adjacent wall panels with a high viscosity glue before performing step [5]. Such provides an adequate water tightness of the joints, preventing said adhesive to enter the joints when pouring same into the space between said wall panels. As a matter of fact, the adhesive added in step [5] may be of low viscosity before same has been hardened.

Finally, it is preferred for the method to further comprise the step of covering joints between said wall panels and said bottom with a high viscosity glue before performing step [5], for the same reason as mentioned above with respect to covering the joints of adjacent walls.

Hereafter, the invention will be further described by means of a drawing. The drawing shows in:
Fig. 1 a partial sectional view through a side wall and part of the bottom of a sink according to the invention,
Fig. 2 a sectional view through a back wall, a bottom and front wall of a sink according to the invention.

The same and similar parts and features have been denoted by the same reference numerals in the figures. However, for ease of understanding the figures, not all parts that are required for a practical embodiment have been shown in the figures.

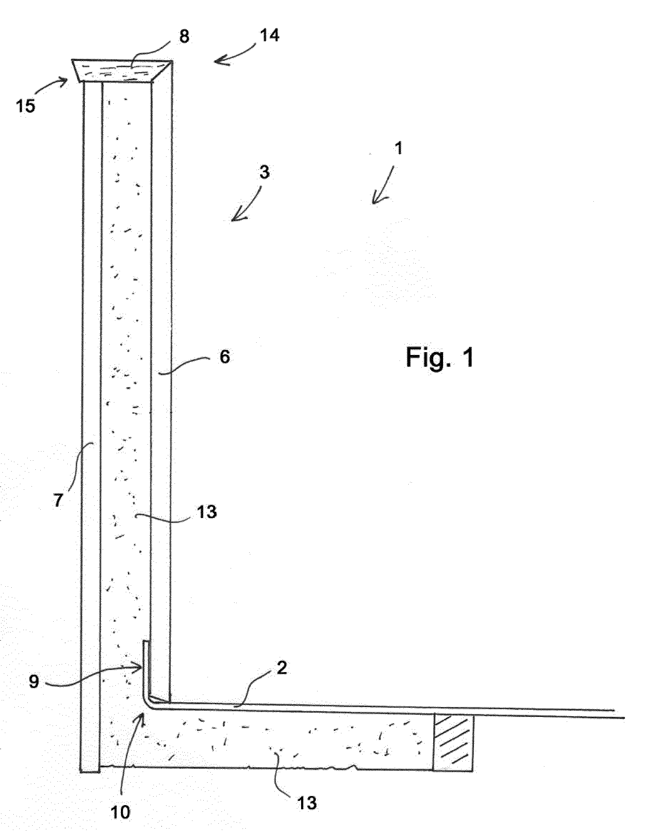

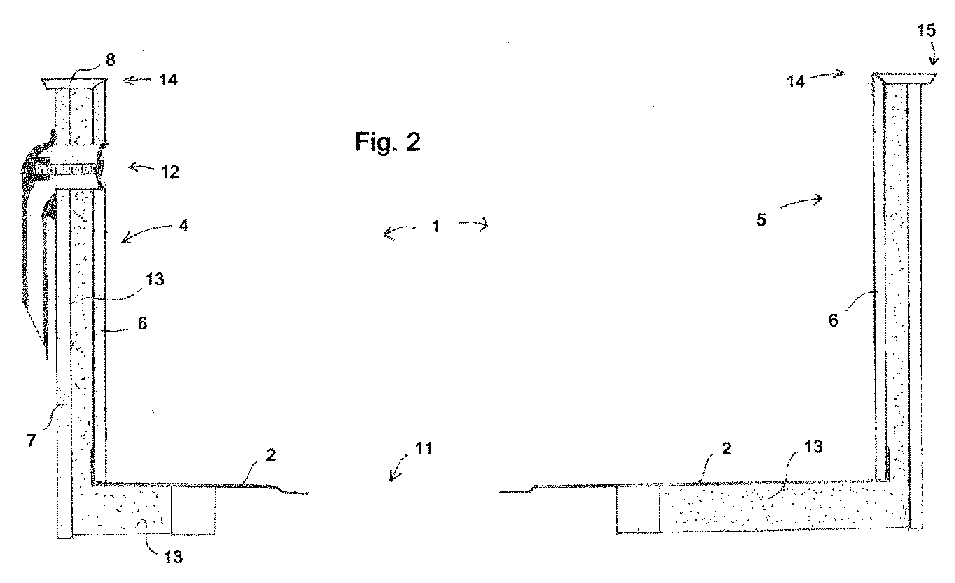

Fig. 1 shows a sink 1 in partial sectional view through part of the bottom 2 and a side wall 3 thereof. The sink has a substantially rectangular shape, and therefore has another side wall 3 and a front wall 5 and a back wall 4 as well (as shown in Fig. 2) in a substantially perpendicular alignment with said side walls 3.

Hereafter, the side wall 3, back wall 4 and front wall 5 are identified with the generic term "wall".

Each wall is composed of an inner wall panel 6 and an outer wall panel 7. Each wall panel 6, 7 is connected to a ridge 8, being positioned at a top most part of the sink 1. Said ridge 8 is positioned at an upper edge 14 of said sink 1 and has a protrusion 15 for suspending said sink to the edge of the work top or kitchen counter.

All references to positions of the sink 1 are based upon its position when in use. A top part is at a position that during use is near the work top surface, whereas a lower part is at the level of the drain of the sink.

Each wall panel 6, 7 may be connected to the ridge 8 by means of a suitable adhesive. As shown in Fig. 1, the inner wall panel 6 is connected to the ridge 8 by means of a mitred joint, yielding a high quality appearance.

The bottom 2 has a flange 9 at its outer edge 10, said flange 9 being positioned in between the inner wall panel 6 and outer wall panel 7. As shown in the figure, said flange is positioned tightly against inner wall panel 6. Preferably, said bottom is connected to said inner wall panel 6 by a high viscosity adhesive, preventing low viscosity adhesive to enter any gap between said bottom 2 and inner wall panel 6.

After hardening the adhesive for connecting wall panels 6, 7 and ridge 8, as well as for connecting inner wall panel 6 and bottom 2, the sink 1 is positioned at its ridge 8, such that the space between inner wall 6 and outer wall 7 is directing upwards. Then, an adhesive is poured in the said space, completely filling said space and preferably also covering at least part of the bottom 2. After completing this step, the adhesive 13 is hardened, yielding a unibody of wall panels 6, 7, ridge 8 and bottom 2.

Fig. 2 shows a sectional view through a back wall 4, a bottom 2 and front wall 5 of a sink 1 according to the invention. A drain (not shown) is to be connected to the bottom at position 11. Also, an overflow protection 12 is provided, being provided in the back wall 4. Such overflow protection 12 is as such known in the art.

The invention is not limited to the embodiments as mentioned above and as shown in the drawings. The invention is limited by the claims only.

The invention also relates to all combinations of features described here independently of each other.

## Claims

1. A sink for a work top, comprising a ridge for coupling said sink to said work top and a basin connected to said ridge, said basin being comprised of walls and a bottom, **characterized in that** at least one of said walls comprises a double wall panel, an inner wall panel and an outer wall panel, wherein said bottom is connected to said inner wall panel, a space between said panels being substantially completely filled with an adhesive.

2. A basin according to claim 1, said bottom comprising a metal sheet material.

3. A sink according to claim 1, wherein said bottom comprises a flanged edge, said flanged edge being at least partly positioned in between said two panels.

4. A sink according to claim 1, wherein said ridge is part of an upper edge of said sink, said edge being manufactured from a metal, preferably a stainless steel material.

5. A sink according to claim 1, wherein said ridge is comprised of a continuous piece of material.

6. A sink according to claim 1, wherein at least two adjacent panels are coupled through mitred joints.

7. A sink according to claim 1, wherein at least two adjacent panels are coupled through butt joints.

8. A sink according to claim 1, wherein said bottom is tightly positioned against said inner panel and wherein said adhesive extends across at least part of said bottom.

9. A sink according to claim 1, wherein said outer panels and said inner panels are positioned against said edge, and wherein said outer panels extend to a position distanced further away from said edge than said inner panels.

10. A sink according to claim 9, wherein said outer panels extend at least 0.5 cm further way from said edge, preferably at least 1 cm.

11. A sink according to claim 1, wherein said wall panels are comprised of a ceramic material.

12. A method for manufacturing a sink according to any of the preceding claims, comprising the steps step of: - [1] positioning an edge profile in a mould; - [2] positioning a set of inner wall panels on said edge and connecting said inner wall panels and said edge profile through an adhesive; - [3] positioning a set of outer wall panels on said edge profile at a distance from said inner wall panels and connecting said outer wall panels and said edge profile; - [4] placing a bottom on said inner wall panels, optionally connecting same;- [5] pouring an adhesive in the space provided between said inner and outer wall panels; and - [6] hardening said adhesive.

13. A method according to claim 12, further comprising the step of: - [7] pouring adhesive on at least part of said bottom, preferably concurrently with step [5].

14. A method according to claim 12, further comprising the step of covering joints between adjacent wall panels with a high viscosity glue before performing step [5].

15. A method according to claim 12, further comprising the step of covering joints between said wall panels and said bottom with a high viscosity glue before performing step [5].
